(19) Europäisches Patentamt
European Patent Office
Office européen des brevets

(11) **EP 4 671 844 A1**

(12) **EUROPEAN PATENT APPLICATION**

(43) Date of publication:
**31.12.2025 Bulletin 2026/01**

(21) Application number: **24185123.7**

(22) Date of filing: **27.06.2024**

(51) International Patent Classification (IPC):
**G02B 21/00** (2006.01)    **G01N 21/64** (2006.01)
**G02B 21/36** (2006.01)

(52) Cooperative Patent Classification (CPC):
**G02B 21/0076; G01N 21/6408; G01N 21/6458; G02B 21/002; G02B 21/0064; G02B 21/008; G02B 21/0084; G02B 21/367**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: Leica Microsystems CMS GmbH
**35578 Wetzlar (DE)**

(72) Inventors:
• **Walter, Kai**
**35578 Wetzlar (DE)**
• **Friedrich, Lars**
**35578 Wetzlar (DE)**
• **Schumann, Christian**
**35578 Wetzlar (DE)**

(74) Representative: **Schaumburg und Partner Patentanwälte mbB**
**Mauerkircherstraße 31**
**81679 München (DE)**

(54) **IMAGE SCANNING MICROSCOPE AND METHOD FOR DETERMINING A SPATIAL DISTRIBUTION OF A CONCENTRATION OF AT LEAST TWO DIFFERENT FLUOROPHORE SPECIES IN A SAMPLE**

(57)    An image scanning microscope (100) comprises an excitation unit (108) configured to generate excitation light (118) according to at least one excitation modality, and an objective lens (102) directed at a sample space (106) and configured to direct the excitation light (118) into the sample space (106) and to receive the detection light (126) from the sample space (106). A scanning unit (110) of the image scanning microscope (100) is arranged along a beam path between the excitation unit (108) and the objective lens (102) and configured to selectively direct the excitation light (118) into different regions of the sample space (106) via the objective lens (102). The image scanning microscope (100) also comprises a detection arrangement (112) comprising at least one spectral encoding element (128) configured to change the spatial distribution of the intensity of the detection light (126) based on the wavelength of the detection light (126) and at least one array detector (130a, 130b) configured to detect the spatial distribution of the intensity of the detection light (126). A main beam splitter (114) of the image scanning microscope (100) is configured to direct the excitation light (118) into the objective lens (102) via the scanning unit (110), and to direct the detection light (126) into the detection arrangement (112). The image scanning microscope (100) further comprises a control unit (116) configured to control the excitation unit (108) to set the excitation modality, and to determine a spatial distribution of a concentration of at least two different fluorophore species in a sample (104) arranged in the sample space (106) based on the detected spatial distribution of the intensity of the detection light (126) and based on the excitation modality and/or at least one photon arrival time detected by at least one time resolved detector element of the detection arrangement (112).

FIG. 1

**Description**

Technical field

The invention relates to an image scanning microscope. The invention further relates to a method for determining a spatial distribution of a concentration of at least two different fluorophore species in a sample.

Background

Image Scanning Microscopy (ISM) is an advanced fluorescence microscopy technique that improves the spatial resolution and signal-to-noise ratio beyond the capabilities of traditional confocal microscopy. In conventional confocal microscopy, a single point detector, such as a single photomultiplier tube, is used to detect the fluorescent light emitted from the sample. In the ISM approach, the point detector is replaced by a multi-element photodetector comprising a plurality of photodetector elements (pixels) arranged in a photodetector array. Each photodetector element in the array is configured to output a detector signal upon receiving fluorescent light. As the sample is scanned with a laser focus, each photodetector element detects a small image of the illuminated sample at each scan position. Appropriate algorithms are then used to combine multiple scan images to reconstruct a single high-resolution image of the sample.

Using the ISM approach, it is possible to increase spatial image resolution and signal-to-noise ratio using the information from the different photodetector elements. However, existing solutions are limited in their capability to distinguish different fluorophore species. In particular, the existing solutions are limited in their capability to determine the spatial distribution of the concentration of different fluorophore species in a sample.

Summary

It is an object to provide an image scanning microscope and a method, which allow the spatial distribution of a concentration of at least two different fluorophore species in a sample to be determined better than with known image scanning microscopes or methods.

The aforementioned object is achieved by the subject-matter of the independent claims. Advantageous embodiments are defined in the dependent claims and the following description.

The proposed image scanning microscope comprises an excitation unit configured to generate excitation light according to at least one excitation modality, and an objective lens directed at a sample space and configured to direct the excitation light into the sample space and to receive the detection light from the sample space. A scanning unit of the image scanning microscope is arranged along a beam path between the excitation unit and the objective lens and configured to selectively direct the excitation light into different regions of the sample space via the objective lens. The image scanning microscope also comprises a detection arrangement comprising at least one spectral encoding element configured to change the spatial distribution of the intensity of the detection light based on the wavelength of the detection light, and at least one array detector configured to detect the spatial distribution of the intensity of the detection light. A main beam splitter of the image scanning microscope is configured to direct the excitation light into the objective lens via the scanning unit, and to direct the detection light into the detection arrangement. The image scanning microscope further comprises a control unit configured to control the excitation unit to set the excitation modality, and to determine a spatial distribution of a concentration of at least two different fluorophore species in a sample arranged in the sample space based on the detected spatial distribution of the intensity of the detection light and based on the excitation modality and/or at least one photon arrival time detected by at least one time resolved detector element of the detection arrangement.

Varying environmental conditions may change the emission and/or excitation characteristics of a fluorophore. For example, varying pH levels can shift the emission wavelength of the fluorophore, and changes in temperature can alter its excitation efficiency and the fluorescence lifetime. Thus, in this document, the term fluorophore species is used to refer to a set of fluorophores grouped by their emission and/or excitation characteristics. Two different fluorophore species may be two different fluorophores, or the same fluorophore found in different regions of the sample, which each may have different environmental conditions. The fluorophores may be exogenous fluorophores that have been introduced into the sample, and/or endogenous fluorophores which naturally occur in the sample.

A sample is imaged using the image scanning microscope by scanning the sample with excitation light focused by the objective lens using the scanning unit. The excitation light excites the different fluorophore species in the sample, which causes them to emit the detection light according to their intrinsic properties and the environmental conditions at the location of the fluorophore species in the sample. This detection light is collected by the objective lens and directed into the detection arrangement via the scanning unit, thereby descanning it. The descanned detection light is then modulated by the spectral encoding element based on the wavelength of the detection light. For example, the spectral encoding element may be a diffractive element that deflects different wavelengths by a different amount. The modulated detection light is then received by the array detector, which detects the spatial distribution of the intensity of the detection light. As the sample is scanned with the excitation light, at least one spatial distribution is detected at each scan position by the array detector. From the collection of the spatial distributions a single high-resolution image of the sample can be reconstructed using algorithms known from Image Scanning Microscopy (ISM).

The proposed image scanning microscope expands upon the ISM approach by not only reconstructing the single high-resolution image from the spatial distributions, but also determining the spatial distribution of the concentration of the at least two different fluorophore species in the sample by detecting additional information about the different fluorophore species. The determination is based on what will be called fingerprints in this document, which describe the system response for the respective fluorophore species. The fingerprints may include a temporal emission behavior of the fluorophore species, which is reconstructed from the at least one photon arrival time, and/or a spectral excitation behavior, i.e. the reaction of the different fluorophore species to the specific excitation modality of the excitation light, for example the spectral composition and/or a modulation pattern of the excitation light. An additional aspect of the fingerprint may be provided by the spectral encoding element, which changes the spatial distribution of the intensity of the detection light based on the wavelength of the detection light. Thereby, the proposed detection arrangement not only enables image scanning microscopy with high spatial resolution and a high signal-to-noise ratio by detecting the detection light using the array detector. By detecting the additional fingerprints of the fluorophore species, the proposed detection arrangement makes it possible to distinguish multiple different fluorophore species in the sample more robustly. In combination, this enables the reconstruction of the spatial distribution of the concentration of the at least two different fluorophore species in the sample in the high spatial resolution and signal-to-noise ratio provided by the ISM approach.

In another embodiment, the control unit is configured to determine at least one spectral information based on the spatial distribution of the intensity of the detection light, and to determine the spatial distribution of the concentration of the at least two different fluorophore species in the sample taking the spectral information into account. In this embodiment, the fact that the spectral encoding element changes the spatial distribution of the intensity of the detection light in a predictable manner based on the wavelength of the detection light is used to extract the spectral information as an additional aspect of the fingerprint. The spectral information may then be used to distinguish the at least two different fluorophore species, for example. Thereby, the spectral information makes the determination of the spatial distribution of the concentration of the at least two different fluorophore species in the sample more accurate and reliable.

In another embodiment, the excitation unit is configured to generate modulated excitation light, in particular pulsed excitation light. In such an embodiment, the excitation modality comprises a modulation pattern of the excitation light. By using excitation light having a known modulation pattern, additional information about the different fluorophore species can be reconstructed. For example, the excitation light may be pulsed. By determining the delay between individual pulses of the excitation light and the detected photon arrival times, it is possible to determine a decay rate of the fluorescence, and thus a fluorescence lifetime of the different fluorophore species. The fluorescence lifetime can be used as an additional aspect of the fingerprints to reliably distinguish the different fluorophore species.

In another embodiment, the excitation unit comprises multiple excitation light sources. At least two of the excitation light sources may be configured to generate modulated light. The excitation unit may further be configured to combine the modulated light generated by the at least two excitation light sources into the modulated excitation light. In this embodiment, two of the excitation light sources may be configured to emit the modulated light at different wavelengths, for example. Each of the wavelengths may be used to excite a different fluorophore species. Further, the two excitation light sources may be configured to generate the modulated light having a different temporal signature each. This makes it possible to relate the photons detected by the time resolved detector element by correlating their respective arrival times with the temporal signatures of the excitation light. Such an arrangement enables the determination of the fluorescence lifetime of multiple fluorophore species at the same time.

In another embodiment, the control unit is configured to perform a fluorescence lifetime measurement based on the modulation pattern of the excitation light and the photon arrival time, and to determine the spatial distribution of the concentration of the at least two different fluorophore species in the sample based on the fluorescence lifetime measurement. In this embodiment, the control unit determines the fluorescence lifetime of the different fluorophore species in order to help distinguish them. For example, the control unit may determine a histogram of the photon arrival times and determine the fluorescence lifetimes using exponential fitting techniques. Based on the fluorescence lifetimes determined at different scan positions, the concentration of the different fluorophore species in the sample can be determined more accurately.

In another embodiment, the excitation unit is configured to selectively generate excitation light of at least two different spectral compositions. In such an embodiment, the excitation modality comprises the spectral composition of the excitation light. The excitation unit may comprise multiple single wavelength lasers, for example. The excitation may also comprise a super-continuum laser, also known as white light laser, and exchangeable filters or an acousto-optical device to select specific wavelengths from the laser light generated by the super-continuum laser as the excitation light. In this embodiment, it is possible to dynamically generate laser light with multiple different wavelengths as the excitation light. This makes it possible to adapt the excitation light to the excitation spectra of many different fluorophores, and to excite the different fluorophores at the same time, for example.

In another embodiment, the excitation unit is configured to generate the excitation light according to at least two different excitation modalities. The control unit may be configured to cause the image scanning microscope to perform a first measurement using excitation light according to a first excitation modality, and a second measurement using excitation light according to a second excitation modality. The control unit may further be configured to determine the spatial distribution of the concentration of the at least two different fluorophore species in the sample based on the first and second excitation modalities, and the spatial distribution of the intensity of the detection light detected during the first and second measurements. In this embodiment, the different fluorophore species are distinguished by their reaction to the two different excitation modalities. For example, in the first measurement, excitation light having a first wavelength range is used and in the second measurement excitation light having a second wavelength range different from the first wavelength range is used. During the first measurement, only a first group of the different fluorophore species is excited. Likewise, during the second measurement, only a second group of the different fluorophore species is excited. Thereby it is possible to distinguish between the first and second groups of fluorophore species based on their reaction to the different wavelengths of the excitation light. The reaction of the fluorophore species to the different wavelengths of the excitation light is then part of the fingerprint of the respective fluorophore species. Another excitation modality that may be varied between the first and second measurements is the modulation of the excitation light. The excitation light used during the first measurement may be a continuous wave, while the excitation light used during the second measurement may be pulsed, for example. This makes it possible to determine fluorescence lifetime in the second measurement, and thereby to further distinguish between fluorophore species detected during the first measurement.

In another embodiment, the control unit is configured to determine the spatial distribution of the concentration of the at least two different fluorophore species in the sample based on a database of different fluorophore species and an image formation model that parametrizes the imaging behavior of the image scanning microscope. In this embodiment, the control unit determines which fingerprints are associated with which specific fluorophore species based on the database and the image formation model. To determine which fluorophore species are present in the sample, the control unit may then, for example, minimize a cost function that characterizes a distance between the measured data and a weighted superposition of the fingerprints determined from the database and the image formation model. The database and the image formation model may each be stored in a local or remote memory element or in a cloud service.

In another embodiment, the control unit is configured to determine the spatial distribution of the concentration of the at least two different fluorophore species in the sample based on previously determined calibration data. In this embodiment, the control unit determines which fingerprints are associated with which specific fluorophore species based on the calibration data, which describes what measured data is detected by the image scanning microscope for the specific fluorophore species. To determine which fluorophore species are present in the sample, the control unit may, for example, proceed similar to the above-described embodiment and minimize a cost function that characterizes a distance between the measured data and the calibration data. The calibration data may be stored in a local or remote memory element or in a cloud service.

To determine the spatial distribution of the concentration of the at least two different fluorophore species in the sample, fingerprints may be determined from both the database and the image formation model as well as the calibration data. In case neither is possible, the fingerprints may be reconstructed "blind". This blind reconstruction can be performed with an expansion of the methods introduced in Neher et al.: "Blind source separation techniques for the decomposition of multiply labeled fluorescence images." Biophysical Journal, vol. 96, no. 9, 6 May 2009, pp. 3791-3800, for example.

In another embodiment, the spectral encoding element comprises at least one of the following: a dispersing prism, a planar grating, a volume grating, a grism, a diffractive optical element, and an array of wavelength selective filters. The array of wavelength selective filters may be a Bayer mask, for example. Dispersion prisms work with light in a broad wavelength range that includes the visible spectrum and part of the infrared and ultraviolet spectrum. Further, dispersing prisms do not generate higher orders of diffraction that can occur with diffraction gratings, which may not be picked up by the array detector. Thus, using a dispersing prism as the spectral encoding element prevents light loss and improves the signal to noise ratio. In particular blazed gratings offer a high diffraction efficiency in a predetermined diffraction order, which reduces light loss and improves the signal-to-noise ratio. Grisms combine a dispersing prism with a grating and exhibit a very low chromatic aberration. Diffractive optical elements allow for more complex light manipulation, making it possible to control the beam shape, providing precise control over the phase and amplitude of the detection light.

In another embodiment, the at least one array detector comprises at least two time resolved detector elements, which are configured to detect the photon arrival time. In this embodiment, the at least one array detector comprises an array of multiple photodetector elements. At least two of these photodetector elements are time resolved detector elements, for example single-photon avalanche diodes or silicon photomultipliers. This makes it possible to use the at least one array detector for detecting the at least one photon arrival time. Alternatively, the detection arrangement may comprise the time resolved detector element as an element that is separate from the at least one array detector.

In another embodiment, the at least one array detector comprises a two-dimensional array of photodetector elements, in particular a SPAD-array or SiPM-array. Each photodetector element acts as a single pixel detector that captures part of the detection light at a different position in the array. Such an arrangement makes it possible to detect the two-dimensional spatial distribution of the intensity of the detection light. SPAD stands for single-photon avalanche diodes and refers to a type of photodetector element characterized by their high sensitivity, their fast timing resolution, and their ability to detect single photons with high efficiency. An advantage of the SPAD-array is its capability for precise time-resolved measurements, making it possible for the SPAD-array to be used as the time resolved detector element. SiPM stands for Silicon Photomultiplier, another type of photodetector element, which are based on SPADs. Advantages of SiPMs include a low signal-to-noise ratio, a high gain, a low operating voltage, their compact size, and their robustness. Like the SPAD-array, the SiPM-array may be used as the time resolved detector element.

The invention further relates to a method for determining a spatial distribution of a concentration of at least two different fluorophore species in a sample. The method comprises the following steps: a) Generating excitation light according to at least one excitation modality using an excitation unit. b) Selectively directing the excitation light into different regions of the sample using a scanning unit and an objective lens. c) Receiving detection light from the sample using the objective lens and directing the detection light into a detection arrangement using a main beam splitter. d) Changing the spatial distribution of the intensity of the detection light based on the wavelength of the detection light using a spectral encoding element of the detection arrangement. e) Detecting the spatial distribution of the intensity of the detection light using at least one array detector of the detection arrangement. f) Optionally detecting a photon arrival time using the at least one array detector as a time resolved detector element or using at least one separate time resolved detector element of the detection arrangement. g) Determining the spatial distribution of the concentration of the at least two different fluorophore species in the sample based on the detected spatial distribution of the intensity of the detection light and based on the excitation modality and/or the photon arrival time.

The method has the same advantages as the image scanning microscope described above. In particular, the method may be supplemented with the features described in this document in connection with the image scanning microscope. Furthermore, the image scanning microscope described above may be supplemented with the features described in this document in connection with the method.

In an embodiment the method comprises a calibration for generating calibration data based on which the spatial distribution of the concentration of the at least two different fluorophore species in the sample is determined. The calibration data describes what measured data is detected by the image scanning microscope for the specific fluorophore species. Based on this calibration data the spatial distribution of the concentration of the at least two different fluorophore species in the sample may be determined, for example by minimizing the cost function that characterizes a distance between the measured data and the calibration data as described above.

In another embodiment, the calibration comprises performing the steps a) to f) using a sample having a known spatial distribution of the concentration of the at least two different fluorophore species and/or using multiple samples each comprising a single fluorophore species. In this embodiment, the calibration data is generated using a sample or samples having a known spatial distribution of the concentration of the different fluorophore species as reference. This results in highly reliable calibration data, which accurately describes how the different fluorophore species are imaged.

In another embodiment, the calibration data is generated from detection light received from regions of the sample comprising a single fluorophore species. This step may be used if no sample having a known spatial distribution of the concentration of the different fluorophore species is available as a reference for the calibration. In this case, the region of the sample is imaged which is known to comprise only a single fluorophore species, for example, because the sample has been prepared that way.

Short Description of the Figures

Hereinafter, specific embodiments are described referring to the drawings, wherein:

Figure 1    is a schematic view of an image scanning microscope according to an embodiment;

Figure 2    is a flowchart of the method for determining a spatial distribution of a concentration of at least two different fluorophore species in a sample according an embodiment; and

Figure 3    is a flowchart of a calibration that may be performed as part of the method according to Figure 2.

Detailed Description

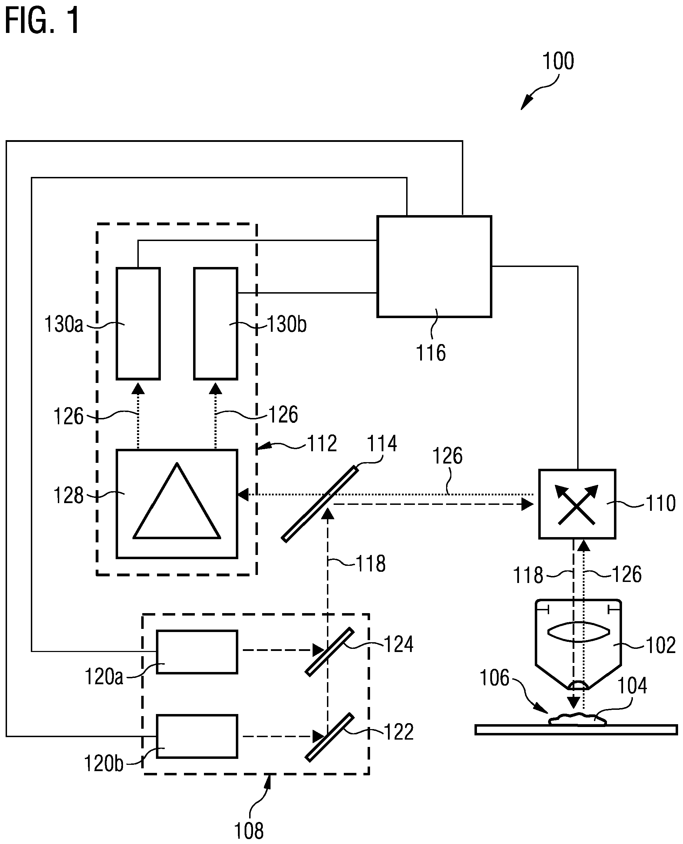

Figure 1 is a schematic view of an image scanning microscope 100 according to an embodiment. The image scanning microscope 100 exemplary comprises a single objective lens 102 directed at a sample 104 arranged in a sample space 106. The image scanning microscope 100 further comprises an excitation unit 108, a scanning unit 110, a detection arrangement 112, a main beam splitter 114, and a control unit 116.

The excitation unit 108 is configured to generate excitation light 118 according to at least one excitation modality.

The excitation modality may be the spectral composition of the excitation light 118, the intensity of the excitation light 118, or the modulation of the excitation light 118, for example. The excitation unit 108 exemplary comprises two excitation light sources 120a, 120b configured to generate light which is combined into the excitation light 118. In particular, each of the excitation light sources 120a, 120b may be configured to generate light having one single wavelength or a narrow wavelength band. Thus, by selecting which of the excitation light sources 120a, 120b generate light, the spectral content of the excitation light 118 can be varied. Alternatively, or in addition, the excitation unit 108 may comprise a continuum laser and an arrangement of exchangeable filters or a tunable laser to selectively generate excitation light 118 with different wavelengths. To vary the modulation of the excitation light 118 at least one of the excitation light sources 120a, 120b may be configured to generate modulated light, for example pulsed light.

The light generated by the two excitation light sources 120a, 120b is combined into the excitation light 118 using a mirror 122 and a dichroic beam splitter 124, for example. The light generated by a first excitation light source 120a is directed into the main beam splitter 114 by the dichroic beam splitter 124. The light generated by a second excitation light source 120b is directed by the mirror 122 and via the dichroic beam splitter 124 into the main beam splitter 114. Thus, the dichroic beam splitter 124 combines the light generated by the two excitation light sources 120a, 120b into the excitation light 118. The excitation unit 108 may comprise further optical elements such as lenses and apertures for forming a beam from the excitation light 118, which are not shown in Figure 1.

The excitation light 118 generated by the excitation unit 108 is directed by the main beam splitter 114 towards the scanning unit 110. The scanning unit 110 is configured to deflect the excitation light 118 to selectively direct the excitation light 118 into different regions of the sample space 106 via the objective lens 102, for example in a meandering fashion. This makes it possible to scan the sample 104 using the excitation light 118 focused by the objective lens 102. To deflect the excitation light 118, the scanning unit 110 may comprise one or more galvanometric mirrors or acousto-optic deflectors, for example. The beam path of the excitation light 118 is shown in Figure 1 using dashed lines originating at the excitation light sources 120a, 120b and ending at the sample 104.

By illuminating the sample 104 using the excitation light 118 detection light 126 is generated. In particular, the excitation light 118 excites fluorophores arranged in the sample 104, which emit fluorescence light as the detection light 126. Depending on the excitation modality of the excitation light 118, different fluorophore species may be excited. For example, only some of the fluorophore species arranged in the sample 104 are excited due to the excitation light 118 having a narrow wavelength band. The detection light 126 is collected by the objective lens 102 and directed back towards the main beam splitter 114 via the scanning unit 110. Due to the arrangement of the scanning unit 110 between the main beam splitter 114 and the objective lens 102, the deflection of the excitation light 118 is reversed for the detection light 126. This directs the detection light 126 towards a single point regardless of a deflection angle of the scanning unit 110. The detection light 126 has been descanned, so to speak. The descanned detection light 126 is then directed by the main beam splitter 114 into the detection arrangement 112. The beam path of the detection light 126 is shown in Figure 1 using a dotted line originating at the sample 104.

The detection arrangement 112 exemplary comprises a spectral encoding element 128, and two array detectors 130a, 130b. The spectral encoding element 128 changes the spatial distribution of the intensity of the detection light 126 based on the wavelength of the detection light 126. For example, the spectral encoding element 128 may comprise at least one dispersing prism, which deflect shorter wavelengths more than longer wavelengths. The spectral encoding element 128 may also comprise a grating, such as a planar or volume grating, which disperses the detection light 126 into its constituent wavelengths through diffraction, producing multiple diffraction orders. The spatial distribution of the intensity of the detection light 126 may also be changed using an array of wavelength selective filters, such as a Bayer mask, arranged in front of the array detectors 130a, 130b. The array of wavelength selective filters allows only certain wavelengths of the detection light 126 to pass onto specific regions of the array detectors 130a, 130b, thereby altering the intensity pattern across the surface of the array detectors 130a, 130b.

The detection light 126, which has passed the spectral encoding element 128, is then received by the array detectors 130a, 130b. Each of the array detectors 130a, 130b comprises an array of photodetector elements, preferably a two-dimensional array of photodetector elements, for example photodiodes such as single-photon avalanche diodes (SPAD), or photomultiplier tubes (PMT) such as gallium arsenide phosphide (GaAsP) PMT. Each photodetector element acts as a single pixel detector that captures part of the detection light 126 at a different position in the array. Thus, the array detectors 130a, 130b make it possible to detect the spatial distribution of the intensity of the detection light 126. As the sample 104 is scanned with the excitation light 118, at least one spatial distribution is detected at each scan position by each of the array detectors 130a, 130b. From the collection of the spatial distributions a single high-resolution image of the sample 104 can be reconstructed. This imaging technique is known as Image Scanning Microscopy (ISM), which has an increased spatial resolution and signal-to-noise ratio compared to conventional Confocal Laser-Scanning Microscopy (CLSM). Since the spatial distribution of the intensity of the detection light 126 has been altered based on the wavelength of the detection light 126, it is further possible to determine a spectral information about the detection light 126, for example a spectral composition of the detection light 126. Further, two or more of the photodetector elements of at least one of the array detectors 130a, 130b may be configured to detect photon arrival times. Alternatively, one of the two array detectors 130a, 130b may be a time resolved detector element instead, in particular a non-imaging or single pixel detector element capable of detecting the photon arrival times.

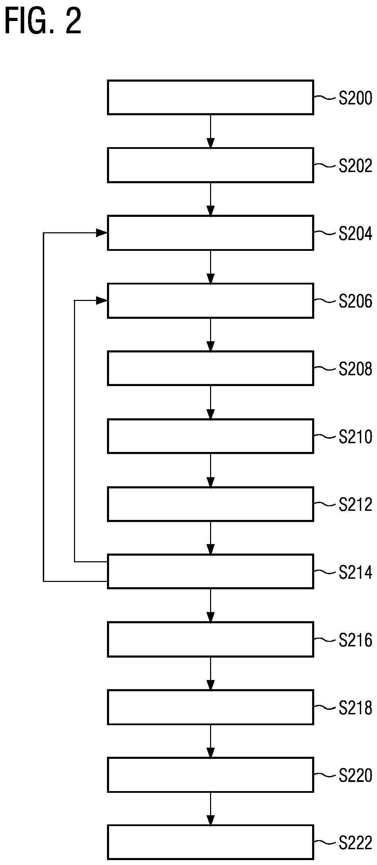

The control unit 116 is configured to control the excitation unit 108, the scanning unit 110, and the array detectors 130a, 130b, to receive image data from the array detectors 130a, 130b, and to process the image data. The control unit 116 is further configured to cause the image scanning microscope 100 to perform a method for determining a spatial distribution of a concentration of at least two different fluorophore species in the sample 104. Specifically, the control unit 116 controls the excitation unit 108 to set the excitation modality. Based on the detected spatial distribution of the intensity of the detection light 126 and based on the excitation modality and/or the photon arrival times, the control unit 116 then determines the spatial distribution of the concentration of the different fluorophore species in the sample 104. The method is described in more detail below with reference to Figure 2.

Figure 2 is a flowchart of the method for determining a spatial distribution of a concentration of at least two different fluorophore species in a sample 104. The method is described as being performed using the image scanning microscope 100 according to Figure 1 as an example only. Before the method is started, the sample 104 may be prepared by introducing fluorophores, such as fluorescent dyes, proteins, or quantum dots, into the sample 104. Alternatively, the method may be performed using endogenous fluorophores only.

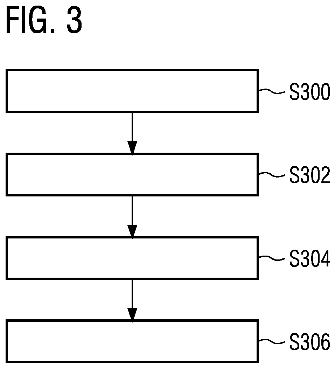

The method is started in step S200. In the optional step S202, a calibration is performed to generate calibration data. The calibration is described in more detail below with reference to Figure 3. In step S204, excitation light 118 is generated according to an excitation modality. The excitation modality may be the spectral content of the excitation light 118, for example the wavelength range or ranges of the excitation light 118. The excitation modality may further be the intensity of the excitation light 118, and/or a modulation of the excitation light 118. The excitation light 118 may be pulsed, for example. In an example, the control unit 116 controls the excitation unit 108 to generate the excitation light 118 in accordance with the excitation modality. In step 206, the excitation light 118 is then directed into the sample 104. For example, the excitation light 118 is focused onto a scan position in the sample 104 using the scanning unit 110 and the objective lens 102.

The excitation light 118 then excites the fluorophores present in the sample 104, which in turn generate fluorescence light as the detection light 126. Both the emission and excitation characteristics of the fluorophore may vary based on intrinsic properties of the fluorophore, for example on the molecule used and the molecule's configuration, and on its environmental conditions, such as pH levels and temperature. For example, the same fluorophore may have a different emission spectrum based on the pH level of its immediate surroundings. Thus, the term fluorophore species is used to distinguish groups of fluorophores with different emission and/or excitation characteristics. The detection light 126 emitted by the different fluorophore species is then received in step S208, for example by the objective lens 102. In step S210, the spatial distribution of the intensity of the detection light 126 is changed based on the wavelength of the detection light 126, for example using the spectral encoding element 128. This may include diffraction of the detection light 126, i.e. deflecting different wavelengths by a different amount. This may also include filtering certain wavelengths or wavelength ranges. In step S212, the changed spatial distribution of the intensity of the detection light 126 is detected using at least one array detector 130a, 130b. This spatial distribution is a convolution of a point spread function (PSF) that depends on the optical configuration of the imaging system, for example the image scanning microscope 100, and the source of the detection light 126, which may be assumed to be point-like. Additionally, in the optional step S214 at least one photon arrival time of the detection light 126 is detected, for example using the array detector 130a, 130b or a dedicated time resolved detector element.

The steps S206 to 5214 are repeated until a region of interest of the sample 104 has been scanned. Each time, the excitation light 118 is directed into a different region of the sample 104. Thereby, different scan positions are illuminated with the excitation light 118. In an example, the sample 104 is scanned with the excitation light 118 in a meandering fashion to illuminate the region of interest. For example, the excitation light 118 is selectively deflected into different positions of an entrance pupil of the objective lens 102, which then focusses the excitation light 118 into the different regions of the sample 104. As a result, a collection of spatial distributions of the intensity of the detection light 126 is obtained, each spatial distribution being associated with a specific scan position. From this collection of the spatial distributions the single high-resolution image of the sample 104 can be reconstructed using algorithms known from ISM. If step S214 is performed, one also obtains a collection of photon arrival times, each photon arrival time being associated with a specific scan position.

Further, steps S204 to 5214 may be repeated using a different excitation modality each time. Thereby, one obtains multiple collections of the spatial distributions, each being associated with a different excitation modality. For example, in a first measurement, the region of interest is scanned using excitation light 118 according to a first excitation modality, such as a first wavelength range. In a second measurement, the region of interest is scanned again using excitation light 118 according to a second excitation modality, such as a second wavelength range different from the first wavelength range.

In the optional step S216, at least one spectral information is determined based on the spatial distributions of the intensity of the detection light 126 determined in the repeated step S212. Since the detection light 126 is modulated based on the wavelength of the detection light 126 in the repeated step S210, it is possible to reconstruct spectral information from the spatial distributions, for example a spectrum of the detection light 126. For that, algorithms known from spectral-ISM may be used. The spectral information may be determined by the control unit 116, for example. In step S218, which is optionally performed when the repeated step 5214 is performed, a fluorescence lifetime measurement is performed. The fluorescence lifetime measurement is based on the photon arrival times detected in the repeated step S214 as well as on the modulation of the excitation light 118. For example, the excitation light 118 is pulsed. Delays between individual pulses of the excitation light 118 and the detected photon arrival times are determined. From the determined delays, the fluorescence lifetimes may be determined using exponential fitting. The fluorescence lifetime measurement may be performed by the control unit 116, for example.

In step S220, the spatial distribution of the concentration of the at least two different fluorophore species in the sample 104 is determined, which will be denoted by $c_{j_f}(r)$, where $j_f$ is an index of the fluorophore species and r is a spatial coordinate in the sample 104. The determination is based on the detected spatial distributions of the intensity of the detection light 126. The determination is further based on the excitation modality, and/or based on the photon arrival times. A single spatial distribution of intensity will be called $I_{j_d,j_s}(r,r_d,t)$ in the following, where $j_d$ is an index denoting the array detector 130a, 130b used, $j_s$ is an index denoting the excitation modality used, $r_d$ is a spatial coordinate on the array detector 130a, 130b, and $t$ is a coordinate on the time axis that is used when at least one photon arrival time has been determined in step S214.

In an example, an algorithm is applied that reduces the dimension of the measured spatial distributions to the dimensions of interest:

$$I_{j_d,j_s}(r,r_d,t) \rightarrow \left[c_1(r), c_2(r), \dots, c_{n_f}(r)\right].$$

It may be assumed that the measured spatial distributions $I_{j_d,j_s}(r,r_d,t)$ can be approximated by a model which is defined as

$$M_{j_d j_s}(r,r_d,t) = \sum_{j_f} F_{j_f j_d j_s}(r,r_d,t) *_r c_{j_f}(r).$$

The model $M_{j_d j_s}(r,r_d,t)$ is a linear superposition of fingerprints $F_{j_f j_d j_s}(r,r_d,t)$ which is spatially convolved with the concentration $c_{j_f}(r)$ of the respective fluorophore species $j_f$ in the sample 104. The symbol $*r$ denotes the partial convolution for the spatial coordinate $r$, and is defined as

$$[a *_r b](r,\Phi) = \int dr' a(r',\Phi_a)\, b(r - r',\Phi_b),$$

where $\Phi_{a/b} = \left\{v_1^{(a/b)}, v_2^{(a/b)}, \dots\right\}$ is the set of all variables of the functions $a$ and b except r. The output set of variables is the union $\Phi = \Phi_a \cup \Phi_b$. A fingerprint $F_{j_f j_d j_s}(r,r_d,t)$ is a dataset that represents the system response for the respective fluorophore species $j_f$ and can be obtained by modelling and/or during the calibration step 5202. Each fingerprint $F_{j_f j_d j_s}(r,r_d,t)$ describes the expected spatial distribution for a point-like source of the respective fluorophore species $j_f$ and includes the optical effects of the imaging system, for example the image scanning microscope 100, assuming an imaging from the sample plane to the detector plane, for example, the effect of the excitation PSF, the emission PSF, and various aberrations introduced by the imaging system. Each fingerprint $F_{j_f j_d j_s}(r,r_d,t)$ further includes the optical effects of the spectral encoding element 128, and effects regarding the emission spectrum of the fluorophore species $j_f$, which are encoded into the spatial distribution by the spectral encoding element 128. The fingerprints $F_{j_f j_d j_s}(r,r_d,t)$ may further include at least one of the following: effects regarding the fluorescent lifetime of the fluorophore species $j_f$, which can be derived from the photon arrival times, and effects regarding the excitation spectrum of the fluorophore species $j_f$, which can be derived from the response for different excitation modalities if the steps S204 to 5214 have been repeated for different excitation modalities.

If the fingerprints of the different fluorophore species $i_f$ in the sample 104 are known, the spatial distribution of the concentration of the different fluorophore species $j_f$ in the sample 104 may be achieved using the maximum likelihood estimation (MLE) method or equivalently the negative-log-likelihood (NLL) minimization methods. In either case, the determination may be carried out by minimizing a cost function $\mathcal{C}$, which characterizes a distance between the measured spatial distributions $I_{j_d j_s}(r, r_d, t)$ and the model $M_{j_d j_s}(r, r_d, t)$. In general, the determination of the spatial distribution of the concentration $c_{j_f}(r)$ of the different fluorophore species $j_f$ in the sample 104 may be written as

$$c_1(r), \dots, c_{n_f}(r) = \mathrm{argmin}_{\hat{c}_1, \dots, \hat{c}_{n_f}} \mathcal{C} \left[ I_{j_d j_s}(r, r_d, t), \sum_{j_f} \left[ F_{j_f j_d j_s} *_r \hat{c}_{j_f} \right] (r, r_d, t) \right].$$

Assuming Gaussian noise in the measured data, it is appropriate to take the (squared) $L_2$-norm as the cost function:

$$\mathcal{C} = \sum_{j_d} \sum_{j_s} \int \int \int dr dr_d dt \left( I_{j_d j_s}(r, r_d, t) - M_{j_d j_s}(r, r_d, t) \right)^2.$$

In the case of assumed Gaussian noise, the fingerprints $F_{j_f j_d j_s}(r, r_d, t)$ can be estimated by the least squares method. If instead Poisson noise is assumed in the measured data, the appropriate cost function is the Kullback-Leibler-divergence, which leads to an iterative Richardson-Lucy-like estimation algorithm that is described, for example, in Richardson, William Hadley: "Bayesian-Based Iterative Method of Image Restoration", 1970-09-15, JOSA. Alternative solutions can be found in S Bonettini et al: Inverse Problems, 2009, 25 015002.

In case the fingerprints $F_{j_f j_d j_s}(r, r_d, t)$ are not known, they have to be modelled and/or determined in the calibration. The calibration is described below with reference to Figure 3.

To model a fingerprint $F_{j_f j_d j_s}(r, r_d, t)$ for a fluorophore species $j_f$, properties such as the fluorescence excitation spectrum, the fluorescence emission spectrum, and the fluorescence lifetime of the fluorophore species $j_f$ are taken from a database, for example, and combined with an image formation model. The image formation model parametrizes the imaging behavior of the imaging system, for example the image scanning microscope 100. Among the properties described by the image formation model are the excitation PSF, the emission PSF, the optical properties of the spectral encoding element 128, and detector properties, such as the number of array detectors 130a, 130b and detector elements, their size, their spatial arrangement, and their spectral sensitivity. An exemplary image formation model may be found in Hung, Shih-Te, Kalisvaart, Dylan, and Smith, Carlas. "Image scanning microscopy: a vectorial physical optics analysis." Optics Express, 18 July 2023.

Step S220 may be performed by the control unit 116, for example. The method is then ended in step S222.

Figure 3 is a flowchart of the calibration that may be performed as part of the method according to Figure 2. Before the calibration and the method according to Figure 2 are performed, one or more reference samples may be prepared such that the spatial distributions $c_{j_f}(r)$ of the different fluorophore species $j_f$ in the reference sample or samples are known. Such a reference sample is also known as a technical sample, and may comprise beads, lines, a checker-board pattern, or a similar arrangement of the fluorophore species $j_f$. Alternatively, or additionally, the sample 104 itself may be prepared to contain one or more regions which comprise only one fluorophore species $j_f$ each. Alternatively, two or more reference samples may be prepared, such that each reference sample contains a single fluorophore species with an unknown spatial distribution.

The calibration is started in step 5300. In step S302 the calibration data is gathered by imaging the reference sample, and/or the regions of the sample 104 which comprise only one fluorophore species $j_f$ each using the imaging system that will be used for the actual measurement, i.e. steps S204 to S220, or an imaging system that is equivalent with respect to the measurement, for example the same model of imaging system.

Then in step S304, the fingerprints $F_{j_f j_d j_s}(r, r_d, t)$ of the fluorophore species $j_f$ are determined, which are present in the reference sample, or the specially prepared regions of the sample 104. If the spatial distributions $c_{j_f}(r)$ is known, the fingerprint $F_{j_f j_d j_s}(r, r_d, t)$ can be determined by minimizing the cost function C, for example

$$F_{j_f j_d j_s}(r, r_d, t) = \mathrm{argmin}_{\hat{F}_{j_f j_d j_s}} \mathcal{C} \left[ I_{j_d j_s}(r, r_d, t), \left[ \hat{F}_{j_f j_d j_s} *_r c_{j_f} \right] (r, r_d, t) \right].$$

If the spatial distribution $c_{j_f}(r)$ is not known, it has to be estimated as well

$$c_{j_f}(\boldsymbol{r}), F_{j_f j_d j_s}(\boldsymbol{r}, \boldsymbol{r}_d, t) = \mathrm{argmin}_{\hat{c}_{j_f}, \hat{F}_{j_f j_d j_s}} \mathcal{C}\left[I_{j_d j_s}(\boldsymbol{r}, \boldsymbol{r}_d, t), \left[\hat{F}_{j_f j_d j_s} *_r \hat{c}_{j_f}\right](\boldsymbol{r}, \boldsymbol{r}_d, t)\right].$$

The calibration is then ended in step S306.

If the fingerprints $F_{j_f j_d j_s}(\boldsymbol{r}, \boldsymbol{r}_d, t)$ can neither be modelled nor determined from the calibration data, a blind reconstruction is also possible:

$$c_1(\boldsymbol{r}), \dots, c_{n_f}(\boldsymbol{r}), F_{1, j_d j_s}(\boldsymbol{r}, \boldsymbol{r}_d, t), \dots, F_{n_f j_d j_s}(\boldsymbol{r}, \boldsymbol{r}_d, t)$$

$$= \mathrm{argmin}_{\hat{c}_1, \dots, \hat{c}_{n_f}, \hat{F}_{1, j_d j_s}, \dots, \hat{F}_{n_f j_d j_s}} \mathcal{C}\left[I_{j_d j_s}(\boldsymbol{r}, \boldsymbol{r}_d, t), \sum_{j_f}\left[\hat{F}_{j_f j_d j_s} *_r \hat{c}_{j_f}\right](\boldsymbol{r}, \boldsymbol{r}_d, t)\right].$$

All spatial distributions $c_{j_f}(\mathbf{r})$ and fingerprints $F_{j_f j_d j_s}(\mathbf{r}, \mathbf{r}_d, t)$ may be estimated from a single measurement. This can, for example, be carried out with an expansion of the methods introduced in Neher, Richard A., Miso Mitkovski, Frank Kirchhoff, Erwin Neher, Fabian J. Theis, and André Zeug. "Blind source separation techniques for the decomposition of multiply labeled fluorescence images." Biophysical Journal, vol. 96, no. 9, 6 May 2009, pp. 3791-3800.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Reference signs

| | |
|---|---|
| 100 | Image scanning microscope |
| 102 | Objective lens |
| 104 | Sample |
| 106 | Sample space |
| 108 | Excitation unit |
| 110 | Scanning unit |
| 112 | Detection arrangement |
| 114 | Main beam splitter |
| 116 | Control unit |
| 118 | Excitation light |
| 120a, 120b | Excitation light sources |
| 122 | Mirror |
| 124 | Dichroic beam splitter |
| 126 | Detection light |
| 128 | Spectral encoding element |
| 130a, 130b | Array detector |

**Claims**

1. An image scanning microscope (100), comprising

an excitation unit (108) configured to generate excitation light (118) according to at least one excitation modality;
an objective lens (102) directed at a sample space (106) and configured to direct the excitation light (118) into the sample space (106) and to receive the detection light (126) from the sample space (106);
a scanning unit (110) arranged along a beam path between the excitation unit (108) and the objective lens (102) and configured to selectively direct the excitation light (118) into different regions of the sample space (106) via the objective lens (102);
a detection arrangement (112) comprising at least one spectral encoding element (128) configured to change the spatial distribution of the intensity of the detection light (126) based on the wavelength of the detection light (126) and at least one array detector (130a, 130b) configured to detect the spatial distribution of the intensity of the detection light (126);

a main beam splitter (114) configured to direct the excitation light (118) into the objective lens (102) via the scanning unit (110), and to direct the detection light (126) into the detection arrangement (112); and

a control unit (116) configured to control the excitation unit (108) to set the excitation modality, and to determine a spatial distribution of a concentration of at least two different fluorophore species in a sample (104) arranged in the sample space (106) based on the detected spatial distribution of the intensity of the detection light (126) and based on the excitation modality and/or at least one photon arrival time detected by at least one time resolved detector element of the detection arrangement (112).

2. The image scanning microscope (100) according to claim 1, wherein the control unit (116) is configured to determine at least one spectral information based on the spatial distribution of the intensity of the detection light (126), and to determine the spatial distribution of the concentration of the at least two different fluorophore species in the sample (104) taking the spectral information into account.

3. The image scanning microscope (100) according to claim 1 or 2, wherein the excitation unit (108) is configured to generate modulated excitation light (118), in particular pulsed excitation light (118); and wherein the excitation modality comprises a modulation pattern of the excitation light (118).

4. The image scanning microscope (100) according to claim 3, wherein the excitation unit (108) comprises multiple excitation light sources (120a, 120b); wherein at least two of the excitation light sources (120a, 120b) are configured to generate modulated light; and wherein the excitation unit (108) is further configured to combine the modulated light generated by the at least two excitation light sources (120a, 120b) into the modulated excitation light (118).

5. The image scanning microscope (100) according to claim 3 or 4, wherein the control unit (116) is configured to perform a fluorescence lifetime measurement based on the modulation pattern of the excitation light (118) and the photon arrival time, and to determine the spatial distribution of the concentration of the at least two different fluorophore species in the sample (104) based on the fluorescence lifetime measurement.

6. The image scanning microscope (100) according to any one of the preceding claims, wherein the excitation unit (108) is configured to selectively generate excitation light (118) of at least two different spectral compositions; and wherein the excitation modality comprises the spectral composition of the excitation light (118).

7. The image scanning microscope (100) according to any one of the preceding claims, wherein the excitation unit (108) is configured to generate the excitation light (118) according to at least two different excitation modalities;

   wherein the control unit (116) is configured to cause the image scanning microscope (100) to perform a first measurement using excitation light (118) according to a first excitation modality, and a second measurement using excitation light (118) according to a second excitation modality; and

   wherein the control unit (116) is further configured to determine the spatial distribution of the concentration of the at least two different fluorophore species in the sample (104) based on the first and second excitation modalities, and the spatial distribution of the intensity of the detection light (126) detected during the first and second measurements.

8. The image scanning microscope (100) according to any one of the preceding claims, wherein the control unit (116) is configured to determine the spatial distribution of the concentration of the at least two different fluorophore species in the sample (104) based on a database of different fluorophore species and an image formation model that parametrizes the imaging behavior of the image scanning microscope (100).

9. The image scanning microscope (100) according to any one of the preceding claims, wherein the control unit (116) is configured to determine the spatial distribution of the concentration of the at least two different fluorophore species in the sample (104) based on previously determined calibration data.

10. The image scanning microscope (100) according to any one of the preceding claims, wherein the spectral encoding element (128) comprises at least one of the following: a dispersing prism, a planar grating, a volume grating, a grism, a diffractive optical element, and an array of wavelength selective filters.

11. The image scanning microscope (100) according to any one of the preceding claims, wherein the at least one array detector (130a, 130b) comprises at least two time resolved detector elements, which are configured to detect the photon arrival time.

12. The image scanning microscope (100) according to any one of the preceding claims, wherein the at least one array detector (130a, 130b) comprises a two-dimensional array of photodetector elements, in particular a SPAD-array or SiPM-array.

13. A method for determining a spatial distribution of a concentration of at least two different fluorophore species in a sample (104), the method comprising:

a) generating excitation light (118) according to at least one excitation modality using an excitation unit (108);
b) selectively directing the excitation light (118) into different regions of the sample (104) using a scanning unit (110) and an objective lens (102);
c) receiving detection light (126) from the sample (104) using the objective lens (102) and directing the detection light (126) into a detection arrangement (112) using a main beam splitter (114);
d) changing the spatial distribution of the intensity of the detection light (126) based on the wavelength of the detection light (126) using a spectral encoding element (128) of the detection arrangement (112);
e) detecting the spatial distribution of the intensity of the detection light (126) using at least one array detector (130a, 130b) of the detection arrangement (112);
f) optionally detecting a photon arrival time using the at least one array detector (130a, 130b) as a time resolved detector element or using at least one separate time resolved detector element of the detection arrangement (112); and
g) determining the spatial distribution of the concentration of the at least two different fluorophore species in the sample (104) based on the detected spatial distribution of the intensity of the detection light (126) and based on the excitation modality and/or the photon arrival time.

14. The method according to claim 13, comprising a calibration for generating calibration data based on which the spatial distribution of the concentration of the at least two different fluorophore species in the sample (104) is determined.

15. The method according to claim 13 or 14, wherein the calibration comprises performing the steps a) to f) using a sample having a known spatial distribution of the concentration of the at least two different fluorophore species and/or using multiple samples each comprising a single fluorophore species.

16. The method according to any one of the claims 13 to 15, wherein the calibration data is generated from detection light (126) received from regions of the sample (104) comprising a single fluorophore species.

# FIG. 1

100

130a    130b

126    126

112    114

126

128

110

116

118

126

118    126

102

106    104

120a

124

120b

122

108

# FIG. 2

FIG. 3

```
┌─────────────────────────────┐
│                             │~ S300
└─────────────────────────────┘
              │
              ▼
┌─────────────────────────────┐
│                             │~ S302
└─────────────────────────────┘
              │
              ▼
┌─────────────────────────────┐
│                             │~ S304
└─────────────────────────────┘
              │
              ▼
┌─────────────────────────────┐
│                             │~ S306
└─────────────────────────────┘
```

Europäisches
Patentamt

European
Patent Office

Office européen
des brevets

# EUROPEAN SEARCH REPORT

Application Number

EP 24 18 5123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 553 402 A2 (CALIFORNIA INST OF TECHN [US]) 13 July 2005 (2005-07-13) | 1-4,7-16 | INV. G02B21/00 |
| Y | * paragraphs [0022], [0028] - [0033]; figures 1, 2, 6 * | 1-5,7, 10,11,13 | G01N21/64 G02B21/36 |
| X | WO 2023/275777 A1 (FONDAZIONE ST ITALIANO TECNOLOGIA [IT]) 5 January 2023 (2023-01-05) | 1-16 | |
| Y | * p. 9, l. 25-29 - p. 11, l. 2; p. 13, l. 5-14; p. 16, l. 22; step-by-step description on p. 17; figure 4 * | 1-5,7, 10,11,13 | |
| X | DE 103 39 311 B4 (LEICA MICROSYSTEMS [DE]) 27 April 2006 (2006-04-27) | 1-4, 6-10, 12-16 | |
| Y | * paragraphs [0029] - [0031]; figure 1 * | 1-5,7, 10,11,13 | |
| X | EP 1 264 169 B1 (ZEISS CARL MICROIMAGING GMBH [DE]) 30 September 2009 (2009-09-30) | 1-4,7, 10,12,13 | TECHNICAL FIELDS SEARCHED (IPC) |
| Y | * paragraph [0028]; claims 21, 22, 27; figure 5 * | 1-5,7, 10,11,13 | G02B G01N |
| X | US 2003/151741 A1 (WOLLESCHENSKY RALF [DE] ET AL) 14 August 2003 (2003-08-14) | 1-5, 7-10, 13-16 | |
| Y | * paragraphs [0015], [0016], [0028], [0032] - [0036], [0063], [0066] - [0069]; figure 6 * | 1-5,7, 10,11,13 | |
| Y | US 6 687 000 B1 (WHITE JOHN G [US]) 3 February 2004 (2004-02-03) * col. 12, l. 66 - col. 13, l. 31; figure 1 * | 1-5,7, 10,11,13 | |

The present search report has been drawn up for all claims

| Place of search | Date of completion of the search | Examiner |
|---|---|---|
| Munich | 27 November 2024 | Haan, Martine |

EPO FORM 1503 03.82 (P4C01)

## ANNEX TO THE EUROPEAN SEARCH REPORT
## ON EUROPEAN PATENT APPLICATION NO.

EP 24 18 5123

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| EP 1553402 | A2 | 13-07-2005 | NONE | | |
| WO 2023275777 | A1 | 05-01-2023 | CA | 3222868 A1 | 05-01-2023 |
| | | | CN | 117813490 A | 02-04-2024 |
| | | | EP | 4363833 A1 | 08-05-2024 |
| | | | JP | 2024524365 A | 05-07-2024 |
| | | | KR | 20240045211 A | 05-04-2024 |
| | | | US | 2024295498 A1 | 05-09-2024 |
| | | | WO | 2023275777 A1 | 05-01-2023 |
| DE 10339311 | B4 | 27-04-2006 | DE | 10339311 A1 | 14-04-2005 |
| | | | US | 2005046836 A1 | 03-03-2005 |
| EP 1264169 | B1 | 30-09-2009 | AT | E444483 T1 | 15-10-2009 |
| | | | DE | 10038528 A1 | 21-02-2002 |
| | | | EP | 1264169 A1 | 11-12-2002 |
| | | | JP | 4783931 B2 | 28-09-2011 |
| | | | JP | 2004506192 A | 26-02-2004 |
| | | | JP | 2006153891 A | 15-06-2006 |
| | | | WO | 0212864 A1 | 14-02-2002 |
| US 2003151741 | A1 | 14-08-2003 | DE | 10151217 A1 | 17-04-2003 |
| | | | EP | 1308715 A1 | 07-05-2003 |
| | | | JP | 4441695 B2 | 31-03-2010 |
| | | | JP | 2003185581 A | 03-07-2003 |
| | | | US | 2003151741 A1 | 14-08-2003 |
| US 6687000 | B1 | 03-02-2004 | NONE | | |

EPO FORM P0459

For more details about this annex : see Official Journal of the European Patent Office, No. 12/82

**EP 4 671 844 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NEHER et al.** Blind source separation techniques for the decomposition of multiply labeled fluorescence images. *Biophysical Journal*, 06 May 2009, vol. 96 (9), 3791-3800
- **RICHARDSON, WILLIAM HADLEY**. Bayesian-Based Iterative Method of Image Restoration. *JOSA*, 15 September 1970
- **S BONETTINI et al.** *Inverse Problems*, 2009, vol. 25, 015002

- **HUNG, SHIH-TE ; KALISVAART, DYLAN ; SMITH, CARLAS.** Image scanning microscopy: a vectorial physical optics analysis. *Optics Express*, 18 July 2023
- **NEHER ; RICHARD A. ; MISO MITKOVSKI ; FRANK KIRCHHOFF ; ERWIN NEHER ; FABIAN J. THEIS ; ANDRÉ ZEUG**. Blind source separation techniques for the decomposition of multiply labeled fluorescence images. *Biophysical Journal*, 06 May 2009, vol. 96 (9), 3791-3800